Europäisches Patentamt

(19) European Patent Office

Office européen des brevets

(11) Publication number: **0 420 933 B1**

(12) **EUROPEAN PATENT SPECIFICATION**

(45) Date of publication of patent specification: **02.03.94**   (51) Int. Cl.⁵: **B29C 65/34**, F16L 47/02

(21) Application number: **89907994.1**

(22) Date of filing: **22.06.89**

(86) International application number:
**PCT/US89/02738**

(87) International publication number:
**WO 89/12545 (28.12.89 89/30)**

(54) **METHODS AND DEVICES WHICH MAKE USE OF CONDUCTIVE POLYMERS TO JOIN ARTICLES.**

(30) Priority: **22.06.88 US 210054**
**22.06.88 US 209761**

(43) Date of publication of application:
**10.04.91 Bulletin 91/15**

(45) Publication of the grant of the patent:
**02.03.94 Bulletin 94/09**

(84) Designated Contracting States:
**AT BE CH DE FR GB IT LI NL SE**

(56) References cited:
**EP-A- 0 075 901**    **EP-A- 0 157 640**
**EP-A- 0 251 482**    **WO-A-88/06517**
**CH-A- 576 326**    **DE-A- 1 081 288**
**DE-A- 3 442 674**    **FR-A- 1 416 207**
**GB-A- 1 059 523**    **GB-A- 1 265 194**
**US-A- 3 609 104**    **US-A- 4 085 286**
**US-A- 4 318 220**    **US-A- 4 455 482**
**US-A- 4 532 099**

(73) Proprietor: **RAYCHEM CORPORATION**
**300 Constitution Drive**
**Menlo Park California 94025(US)**

(72) Inventor: **MCMILLS, Corey, J.**
**721 Distel Drive**
**Los Altos, CA 94022(US)**
Inventor: **HUGHES, John, R.**
**54 Magnolia Drive**
**Atherton, CA 94025(US)**
Inventor: **CORDIA, Hans**
**132 Los Trancos Circle**
**Portola Valley, CA 94025(US)**
Inventor: **D'HONDT, Johann**
**2080 Marich Way, No. 18**
**Mountain View, CA 94040(US)**
Inventor: **RITTER, Robert, J.**
**42555 Fontainebleau Park Lane**
**Fremont, CA 94538(US)**

(74) Representative: **Auckland, Jacqueline et al**
**Raychem Limited**
**Intellectual Property Law Department**
**Faraday Road**
**Dorcan**
**Swindon, Wiltshire SN3 5HH (GB)**

## Description

This invention relates to a coupler which incorporates a conductive polymeric component, which by virtue of this component can be joined to another article, especially to a pipe and a method of joining a pipe to a coupler according to the preambles of claims 1 and 14 respectively.

Conductive polymers are well known. They comprise a polymeric component and, dispersed or otherwise distributed therein, a particulate conductive filler, e.g. carbon black. Conductive polymers have been widely used in electrical heaters, including laminar heaters which comprise a laminar conductive polymer heating element which is sandwiched between laminar electrodes so that current flows through the conductive polymer at right angles to the plane of the heater. Such laminar heaters can be in the form of heat-recoverable articles or can be secured to heat-recoverable articles so that, by powering the heater, the article can be caused to recover. Typically, the recovery of the article results in joining, repairing, reinforcing or otherwise modifying one or more substrates around or against which the article recovers. Recently, it has been shown that conductive polymers which retain substantial strength above their melting point, especially sintered conductive polymers based on ultra high molecular weight polyethylene (UHMWPE), are particularly useful for heat-recoverable couplers which can be used to join pipes composed of organic polymers (plastic pipes). In such couplers, the conductive polymer component provides the structural strength of the finished coupling and is, therefore, of a thickness comparable to that of the pipes; substantial electrical power is needed to heat such couplers to their recovery temperature. Reference may be made for example to U.S. Patent Nos. 3,987,276, 4,085,286, 4,177,376, 4,177,446, 4,421,582, 4,455,482, 4,570,055, 4,575,618, 4,686,071, U.K. Patent Nos. 1,265,194, 1,449,539, and 2,124,439, German Patent Application No. 3,442,674, and European Application Nos. 157,640, 153,199, 231,068, 197,759, 220,003, 267,234 and 251,482.

Couplers for connection to polymeric pipes incorporating electrically powerable, non conductive polymeric heating elements are also known. For example FR-A-1416207, being the base for the preamble of the independant claims, describes a cylindrical polymeric support with an embedded spiral wrapped wire on its inner surface which can be connected to a power supply. The support can be positioned around the two abutting polymeric pipe ends, and the wire powered to heat and to fuse the supports to the pipes.

Similarly DE-A-1081288 describes a cylindrical polymeric coupling device having electrically conductive wires axially spirally wrapped therearound. This device has tapered ends and fits between an inner pipe and a larger diameter sleeve (with correspondingly tapered ends) and can be powered to join the pipe to the sleeve.

We have now realised that an excellent coupler for joining two articles together can be made incorporating a laminar conductive polymer heating element. The heating element need not be heat-recoverable; indeed in most cases, it is preferably not heat-recoverable. The heat is preferably generated within the heating element by passing electrical current through it, with a substantial proportion (preferably all) of the current flowing parallel to the surfaces of the heating element. One important reason for this preference is that if electrodes are placed on the heating element so that current flows at right angles to the surfaces thereof, the electrodes are then present in the bonding area and lessen the strength of the joint between the articles.

An advantage of the coupler is that heat is generated at the interface, where it is needed, and not elsewhere, thus reducing power requirements and the danger of overheating. This and other advantages are explained below.

The novel coupler is particularly effective joining (or otherwise modifying) articles made of an electrically insulating polymeric material, especially plastic pipes. When the articles are made of a thermoplastic material, it is preferred that the heating melts the thermoplastic material and the conductive polymer sufficiently to effect fusion between the article and the heating element. When one or both of the articles is made of a material which will not fuse in this way, then some form of heat-activatable adhesive must be used, e.g. a thermosetting resin.

A first aspect of the invention provides a coupler suitable for joining to another article, preferably a pipe, the coupler comprising a tubular member which is composed of an electrically insulating polymeric composition, a heating element secured to the inner surface of the tubular member and at least two electrodes which can be connected to a source of electrical power to cause electrical current to flow through the heating element, characterised in that:

(1) the tubular member is made up of one or more tube-forming components;

(2) the heating element is laminar and is composed of a conductive polymer, the heating element forming part of a gasket which is secured to the inner surface(s) of the tube-forming component(s), and which additionally comprises the at least two electrodes which when connected to a source of electrical power cause current to pass through the heating element(s) substantially parallel to the surface thereof, and

(3) said tube-forming component(s) and gasket-(s) are such that

(i) they can be assembled and/or deformed relative to each other to form a tubular coupler positioned around or within an article such as a pipe, and

(ii) they can be brought into intimate contact with the article by the application of circumferential forces to the coupler.

A second aspect of the invention provides a method of joining (a) a coupler comprising an electrically insulating polymeric tubular member having a heating element secured to the inner surface thereof and at least two electrodes secured to the heating element to (b) another article, preferably a pipe, the method comprising connecting the electrodes to a source of electrical power to cause electrical current to flow through the heating element, characterised in that:

(1) the tubular member is made up of one or more tube-forming component(s) and the method comprises

(a) assembling these component(s) (21), and/or deforming these component(s) (21), relative to each other to form a tubular coupler positioned either around or within the article such as a pipe (11,12) and

(b) applying circumferential forces to the relatively assembled or deformed tube-forming component(s) (21) to bring the tube-forming component(s) into intimate contact with the article (11, 12); and

(2) the heating element (31) is laminar and composed of a conductive polymer, the heating element (31) forming part of a gasket which is secured to the inner surface of the tube-forming component(s), and wherein, when the method step of connecting the electrodes (33,34) to a source of electrical power is carried out, the electrodes (33,34) are so positioned that electrical current passes through the heating element substantially parallel to the surface thereof.

The term "intimate contact" is used herein to denote a sufficiently close conformity between the surfaces to ensure that when the heat is generated within the conductive polymer, the heat serves its intended purpose of joining the contacting surfaces together and does not cause any substantial damage to the article to which the coupler is joined, or to any part of the coupler, including the gasket. If there are voids present at the various interfaces, they can result in overheating which is wasteful and can be damaging, particularly when the rate at which power is generated is high.

The term "joining" is used herein to include an improvement in an existing join, for example by fusing together surfaces which are already joined together in some other way or by completing fusion between surfaces which are already fused together at spaced-apart locations. The join between the coupler and the article is preferably gastight and liquid-tight, and is preferably such that in an appropriate physical test, e.g. a flex, tension, torsion, or bust test, either the coupler or the article fails before the join.

The coupler of the invention is particularly useful when the tube-forming component(s) of the coupler and the article to which the coupler is to be joined (A) are composed of polymeric compositions which are the same or in which at least 80%, preferably at least 90%, especially substantially 100%, of the repeating units of the polymer are the same, and (B) are jointed together by (i) fusion to opposite sides of a laminar conductive polymer element comprising a polymeric component in which at least 80%, preferably at least 90%, especially substantially 100%, of the repeating units are the same as in tube-forming component(s) of the coupler and the article to which the coupler is to be joined. The preferred polymer in each of the components is polyethylene. The polyethylenes in the different components need not be, indeed usually will not be, the same. For example two pipes composed of melt-extruded low, medium or high density polyethylene can be joined together with a coupler which is composed of the same or a different melt-extruded low, medium or high density polyethylene, by means of a gasket which comprises a conductive polymer based on a sintered ultra high molecular weight polyethylene.

The term "fusion" is used herein to denote a process in which two polymeric substrates are joined directly to each other with the aid of heat, and there is sufficient molecular compatibility between the substrates that, under the conditions of the process, molecular diffusion takes place across the interface between the substrates and/or there is viscoelastic contact between the substrates as defined by J N Anand in Adhesion 1(1969), 16-23 and Adhesion 2 (1970) 16-22. Any fusion process occuring in the present invention preferably results in a bond which has a mechanical performance which is superior to that of at least one of the articles which has fused (e.g. the coupler or the article to which the coupler is joined). The surfaces of the articles which have undergone fusion are said to be "fused" together.

In most cases, the tube-forming component(s) of the coupler, and the article to which the coupler to be joined are substantially thicker than at least a part of the gasket. For example, the thickness of each of the articles may be from 0.13 to 15.24 cm (0.05 to 6.0 inch), preferably 0.25 to 5.08 cm (0.1 to 2.0 inch), and will not usually differ by a factor of more than 5, preferably not more than 3, whereas the gasket will usually be no more than 0.38 cm (0.15 inch), preferably no more than 0.13 cm (0.05 inch), thick when the tube-forming component(s) of the coupler, and the article to which the coupler is to be joined are fused to opposite faces of the conductive polymer element.

Especially when one (or both) of the surfaces to be joined e.g. one surface of the tube-forming component(s) of the coupler and one surface of the article to which the coupler is to be joined is composed of a non-polymeric material, e.g. is composed of concrete or a metal, or when there is insufficient compatibility between the polymeric materials to allow fusion to take place, e.g. where one or both is composed of a thermoset material, e.g. an epoxy or other resin reinforced with glass fibres, an insert can be placed between the surfaces to be joined, the insert being such that, when heated by the conductive polymer, it undergoes a physical or chemical change which joins the surfaces together. Thus the insert can for example be composed of a partially cured thermosetting resin or a hot-melt adhesive (including a sheet of a polymer which is sufficiently compatible to become fused to each of the surfaces). The insert can be secured to the gasket or to the article before the gasket and the two articles are assembled, or it can be inserted in situ. for example, a sheet of polyethylene or another insulating polymeric material can be secured to one or both faces of the conductive polymer element. When the surfaces to be joined are compatible with each other, the gasket can have apertures therein so that the first and second surfaces can be fused directly to each other through the apertures.

In the novel couplers defined above, the term "tubular component" is used to include any component which, in the method, is in a tubular configuration. Thus it can be a flexible tape which is wrapped around the first article; or an articulated article comprising at least two component members, each of which is joined to at least one other component member; or a plurality of composite components which can be assembled together in situ. Part of the laminar heater, or an additional laminar heater, can be used to bond adjacent, e.g. overlapping, parts of the tubular component to each other, preferably simultaneously with the joining of the articles to each other.

The following detailed description of the invention has been divided up into various sections and sub-sections. It is to be understood that this is for clarity and convenience, and that relevant disclosure of a particular feature may be included in more than one section or sub-section, that the headings of the sections and sub-sections are not to be regarded as having any limiting effect, and that the disclosure of this specification includes all the appropriate combinations of information found in the different sections and sub-sections. Similarly, although the various Figures and the descriptions thereof disclose specific embodiments of the invention, it is to be understood that where a specific feature is disclosed in the context of a particular Figure, such feature can also be used, to the extent appropriate, in the context of another Figure or the invention in general.

A. Gasket

1. Location at Which Heat is Generated

In the present invention, heat is generated substantially only where it is needed, i.e. at or close to the surfaces to be joined. This has distinct advantages over prior art processes in which heat is generated at some relatively remote point such that significant thermal barriers have to be overcome before the desired heating is achieved, or in which heat is generated not only at the desired location but also at other locations. For example, the power consumption and heating time are reduced, the damage resulting from overheating can be eliminated or reduced. The tube-forming component(s) of the coupler and the article to which the coupler is to be joined, and any components of the gasket in addition to the conductive polymer and electrodes are preferably such that no significant heat is generated within them. At least the surfaces of the tube-forming component(s) of the coupler and the article to which the coupler is to be joined are preferably non-conductive, e.g. composed of an insulating polymeric composition. If a surface is conductive, it is preferably separated from the conductive polymer by a layer of a non-conductive material.

2. Shape of the Conductive Polymer Element

It is in general desirable that heat should be generated over a substantial area in order to provide a satisfactory bond between the tube-forming component(s) of the coupler and the article to which the coupler is to be joined, and that the heat should be generated in such a way that, taking into account different rates of thermal transfer in the assembly, the heating is substantially uniform in those parts of the assembly where fusion (or activation of a thermally responsive insert) is desired.

Non-uniform heating tends to result in non-uniform bonding and to cause overheating in the locations at which heat is generated in an attempt to supply sufficient heat to other locations at which bonding is desired. For this reason, it is preferred that the conductive polymer should be present in the form of a laminar element having a relatively wide and thin crosssection, e.g. a ratio of width to thickness of at least 8, preferably at least 20, particularly at least 50, especially 50 to 200, e.g. 100 to 160. Thus the laminar conductive polymer element can be in the form of a tape, particularly a flexible tape, which has a length which is for example at least 3 times, preferably at least 6 times, its width. The laminar conductive polymer element will generally be of uniform width and thickness, but can be of non-uniform width and/or non-uniform thickness, e.g. corrugated, ribbed or grooved. The average thickness of the tape is preferably 0.013 to 0.38 cm (.005 to 0.150 inch), particularly 0.25 to 0.13 cm (.01 to .05 inch). The ratio of the total surface area of the tape (i.e. including both surfaces) to the volume of the tape is preferably at least 7.87 cm$^{-1}$ (20 inch$^{-1}$), particularly at least 15.7 cm$^{-1}$ (40 inch$^{-1}$), especially 15.7 to 39.4 cm$^{-1}$ (40 to 100 inch$^{-1}$), e.g. 21.7 to 29.5 cm$^{-1}$(55 to 75 inch$^{-1}$).

### 3. Electrodes

The electrodes are preferably placed at opposite edge portions of a laminar conductive polymer element; they may be partially or completely embedded in the conductive polymer element or placed on a surface thereof, preferably the same surface. In this embodiment, substantially all of the current flows in the plane of the laminar element, little or none of the heated portion of the laminar element is covered by the electrodes, and the heat is generated in a bonding section which has substantial width and length, and is substantially free of metal. Thus the bonding section generally has an area of at least 1.62 cm$^2$ (0.25 square inch), preferably at least 6.45 cm$^2$ (1 square inch), particularly at least 25.8 cm$^2$(4 square inch), especially at least 64.5 cm$^2$(10 square inch), e.g. 64.5 to 774 cm$^2$(10 to 120 square inch), and has a width which is preferably at least 4.01 cm (0.4 inch), particularly at least 2.54 cm (1 inch), e.g. up to 25.4 cm (10 inch), and a length which is preferably at least 2.54 cm (1 inch), particularly at least 7.62 cm (3 inch), especially at least 25.4 cm (10 inch), e.g. 50.8 to 508 cm (20 to 200 inch). Much larger dimensions can be used. For example, when joining large pipes, the bonding area can be 1290 to 1935 cm$^2$ (2,000 to 3,000 sq. inch). A large metal-free bonding section provides important benefits, because the presence in a bonding section of metal wires or strips (e.g. metal wires and strips such as have been used in prior art joining methods as resistance heaters) often reduces the overall strength of the bond.

The electrodes which are generally present in the gaskets are preferably such that substantially no heat is generated within them. However, they can be of dimensions and resistivity such that substantial heat is generated within them, either uniformly along their length or in a desired pattern. The electrodes are preferably composed of copper, but can be composed of another metal or other material of appropriate resistivity.

The electrodes are preferably longitudinal electrodes (e.g. metal strips, braid, or silver paint or a combination of these) applied along (or near) the edges of one or both surfaces. In a preferred embodiment, the electrodes are attached to the conductive polymer by the use of a conductive adhesive. The conductive adhesive, which is preferably in the form of a self-supporting strip composed of an organic polymer and, dispersed in said polymer, a particulate conductive filler, is positioned between the tape and the electrodes or other laminar elements, and the assembly is laminated under pressure at a temperature sufficient to melt the adhesive.

In a particularly preferred embodiment, at least one of the electrodes comprises a core of conductive adhesive surrounded by a metal layer, e.g. a braid. Attachment of such an electrode to the surface of the tape is preferably achieved by applying a voltage to the electrode to heat it, positioning the electrode on the surface of the tape, and then applying pressure in order to laminate the electrode to the surface. Excellent adhesion is achieved when the conductive adhesive is allowed to melt and flow through the interstices of the braid and thus contact the surface of the tape. It is preferred that the electrode be heated to a temperature at least 30°C above, preferably at least 50°C above, the melting point or activation temperature of the conductive adhesive.

### 4. The Conductive Polymer

As noted above, an important factor in the present invention is the fact that heat is generated where it is needed, the conductive polymer element being sandwiched between the surfaces to be joined and maintained in intimate contact with them. This has important implications for the preferred nature of the conductive polymer employed and the rate at which power is generated therein.

Because the conductive polymer is surrounded by and in intimate contact with the components adjacent thereto, and because it is relatively thin, heat can be removed from it very uniformly and efficiently. It is, therefore, possible to heat the conductive polymer to a temperature well above its melting point, and to maintain it at such a temperature for a relatively long time, without danger that part of it will become degraded through overheating, thus leading to a weak spot in the bonding section. The generation of high temperatures in this way is very useful in ensuring rapid melting and consequent fusion of adjacent polymeric surfaces, or rapid curing of a thermosetting resin, or rapid activation of a hot melt adhesive, or the like. On the other hand, if the conductive polymer becomes too fluid at the elevated temperature, it will tend to flow so as to disrupt the desired current flow and change the amount and/or the distribution of the heat generated within it. Flow of the conductive polymer out of the recess will also tend to reduce the pressure between the various elements and to result in less efficient bonding. For these reasons, it is preferred to use a conductive polymer which maintains substantial strength above its melting point, for example a polymer which, at a temperature 50°C above its softening point, has a Melt Flow index of less than 0.3 g/10 min, particularly less than 0.1 g/10 min, especially less than 0.05 g/10 min, at a loading of 3 kg, and a Melt Flow index of less than 3.0 g/10 min, particularly less than 1.0 g/10 min, especially less than 0.1 g/10 min, at a loading of 15 kg. Flow of the current-carrying conductive polymer can also be minimised by placing one or more barriers to such flow around the current-carrying conductive polymer. Such a barrier can be provided for example by an adjacent and integral portion of conductive polymer through which little or no current flows, or through an adjacent barrier of an insulating polymer which may be separate from or integral with the conductive polymer.

Just as flow of the conductive polymer out of the recess reduces the bonding pressures available, so also expansion of the conductive polymer increases the bonding pressures. It is, therefore, preferred to use a conductive polymer which increases substantially in volume as it is heated, preferably one which increases in volume by at least 10%, preferably at least 15%, when it is heated from 23°C to the melting point of at least part of the polymeric component of the conductive polymer. In many cases, the conductive polymer is heated to a temperature well above its melting point, and it will continue to expand during such heating. Preferably the conductive polymer increases in volume by at least 20%, particularly at least 25%, especially at least 30%, between room temperature and the highest temperature which it reaches during the method.

When, as is preferred, the conductive polymer becomes fused to an adjacent polymeric surface, it is necessary for it to be heated to a sufficiently high temperature for fusion to take place. If the conductive polymer exhibits PTC behaviour, it may not reach a high enough temperature. It is preferred, therefore, that the conductive polymer should exhibit essentially ZTC behaviour in the temperature range of operation, and in particular that it should increase in resistivity by a factor of less than 5, preferably less than 2, particularly less than 1.3, over a temperature range of 23°C to 250°C and/or over a temperature range of 23°C to $(T_m + 50)$°C, where $T_m$ is the softening point of the composition.

Having regard to the preferred features set out above, conductive polymers which are particularly useful in the present invention comprise, and preferably consist essentially of,

(a) a matrix consisting essentially of organic polymer particles which have been sintered together so that the particles have coalesced without completely losing their identity, particularly particles of ultra high molecular weight polyethylene (UHMWPE), and

(b) a particulate filler, preferably carbon black, which is dispersed in said matrix but which is present substantially only at or near the boundaries of the coalesced particles.

Such sintered conductive polymers are described, for example, in European Application No. 157,640. UHMWPE generally has a molecular weight of at least 1.5 million, preferably greater than 3.0 million, e.g. 4 to 6 million. Other polymers that may be sintered include polytetrafluoroethylene, polyphenylene sulfide, and polyimides.

Sintered conductive polymers can be prepared by sintering a dry blend of the polymer particles and the filler. A typical process involves compaction of the dry blend, sintering of the compacted blend at or above atmospheric pressure and at a temperature at which the polymer softens but does not flow excessively, followed by cooling under pressure. The sintering is preferably conducted as part of a ram extrusion process which produces a rod, and the rod is then skived on a lathe, or otherwise machined, to produce a conductive polymer tape of desired surface texture and shape. For many purposes a tape of substantially rectangular cross-section is satisfactory, but if desired a corrugated, ribbed, or grooved tape can be obtained through the use of a skiving blade of an appropriate shape. Such an irregular shape may be desirable to concentrate pressures at desired points and/or to increase the surface area of the tape, e.g. for heat transfer or bonding purposes.

Other conductive polymers which can be used include those which are based on the so-called very high molecular weight polyethylenes (VHMWPE) having molecular weights of less than 1.5 million and which can be processed by melt-extrusion. VHMWPE polymers generally have molecular weights in the range of 150,000 to 600,000, preferably 200,000 to 400,000.

The resistivity of the conductive polymers used in this invention is generally quite low, e.g. below 1000 ohm-cm, particularly below 100 ohm-cm, especially below 10 ohm-cm, for example, in the range of about 0.5 to 10 ohm-cm. The desired resistivity depends in part upon the power source, which may be of any kind, for example DC of 6 to 48 volts or AC of about 120 or 240 volts. Sintering produces low electrical resistivity at a lower conductive filler loading than for a melt-blended product. Thus the preferred sintered compositions for use in this invention contain less than 9%, preferably less than 7%, particularly 2-6%, by volume of carbon black and/or other conductive filler. Particularly preferred carbon blacks are those sold by Akzo Chemie under the tradename Ketjenblack EC and by Degussa under the tradename Printex XE-2. The low levels of carbon black help to maintain the desired physical properties of the polymer such as flexibility, good elongation, high tensile strength, good notch and impact resistance, and good chemical resistance. The conductive polymer may optionally be crosslinked, providing that this does not prevent any desired fusion thereof.

### 5. Methods of Assembly, and Shape of Gasket

The gasket should preferably be such that when the gasket and tube-forming component(s) of the coupler and the article to which the coupler is to be joined are moved relative to each other, a good interference fit can be achieved between them, thus achieving the desired intimate contact. If the tube-forming component(s) of the coupler and the article to which the coupler is to be joined are placed adjacent to each other and the gasket is placed in the recess between them, or if the gasket is prejoined to the tube-forming component(s) of the coupler but is not in intimate contact with that article, the relative movement preferably produces the desired intimate contact between the tube-forming component(s) and the article to which the coupler is to be joined. If the gasket has already been brought into intimate contact with the tube-forming component(s) of the coupler, e.g. by preassembly, the relative movement produces intimate contact between the surfaces which are not yet in intimate contact, e.g. the gasket surface and the article to which the coupler is to be joined. In many cases, the requirement for intimate contact will mean that the gasket has a relatively wide and thin cross-section, e.g. a ratio of width to thickness of at least 4, preferably at least 10, and often substantially more, for example at least 50, particularly 50 to 200, especially 100 to 160. Thus the gasket may be in the form of a tape, which will generally be of uniform width and thickness, but can be of non-uniform width and/or non-uniform thickness. In many cases, it will be desirable for the tape to be sufficiently flexible to be fitted into the recess, e.g. a recess between a pipe and a coupler, and to have a length which is for example at least 3 times, preferably at least 6 times, its width, and may be much more.

### 6. Conformance of Articles to Each Other During Assembly

The relative movement of the tube-forming component(s) of the coupler and the article to which the coupler is to be joined and the gasket can have the very desirable result of changing the shape of either or both of (a) the tube-forming component(s) of the coupler and (b) the article to which the coupler is to be joined, so that the recess between them is of substantially uniform dimensions. For example, an out-of-round pipe can be placed inside a round coupler, and the gasket used to press the pipe into a round shape. Alternatively, the gasket can change its shape under pressure so as to fill a recess of irregular dimensions.

### 7. Rate at Which Power is Generated, and Temperature Distribution

One of the remarkable features of the present invention is the high rate at which power can be generated within the conductive polymer (without causing substantial degradation thereof) over periods which are long enough to produce the desired fusion (or other physical or chemical effect) at the boundaries of the conductive polymer heating element. This makes it possible to use power sources of much higher voltages than have previously been contemplated; however, it must be remembered that the higher the voltage, the more carefully the duration of the heating must be controlled. Thus an AC voltage of 600 volts or more can be employed. In another method, the heater can be powered by the discharge of one or more capacitors, thus providing both a high voltage and controlled overall power consumption.

The power source and the conductive polymer element are preferably such that the power output of the element is 0.78 to 18.6, particularly 1.09 to 6.20 especially 1.55 to 3.1 watts per $cm^2$ (5 to 120, particularly 7 to 40, especially 10 to 20, watts per square inch) of the total surface area of the element (including both surfaces). One of the advantages of the present invention is that the total energy used is limited because substantially all the heat is generated at the required site. Thus the energy density

$$\underline{P \times t}$$
$$A$$

(where P is the power in watts per second, t is the time in seconds for which the conductive polymer heater is connected, and A is the total surface in square inch of the heater, i.e. including both surfaces thereof) is generally 10 to 100,000, preferably 50 to 25,000, particularly 100 to 5,000, for a time (t) which is generally less than 1,500 seconds, preferably less than 800 secs, particularly less than 150 seconds, especially 10 to 120 seconds. The conductive polymer element, when contacted on one or both sides by a solid substrate, is preferably capable of withstanding a power load of at least 50 watts/cm$^3$, particularly at least 100 watts/cm$^3$, e.g. up to 200 watts/cm$^3$ or even higher. The various quantities given above are at steady state conditions. When the power supply is first switched on, the quantities are usually higher, e.g. twice as high for a very short period of time, because the conductive polymer does show some increase in resistivity with temperature.

Another way of quantifying the difference between the present process and processes in which a relatively thick conductive polymer heater is used is to look at the temperature gradient across the conductive polymer element, which is relatively small in the present invention. Thus in the method of the invention, we believe that the maximum temperature difference between the centre of the conductive polymer element and the outer surface of the element is generally less than 150°C, preferably less than 100°C, particularly less than 75°C, especially less than 50°C.

The temperatures which should be reached at the surfaces to be joned depend upon the way in which the surfaces are to be joined together and the nature of the materials at the interface. In general, the higher the temperature the better, providing that none of the materials is degraded. When fusion is desired, the temperature preferably exceeds the melting point of the material of each surface. When joining is achieved via an insert, the temperature must be sufficient to activate the insert. In preferred processes, a temperature of at least 135°C, preferably at least 150°C, particularly at least 200°C, especially at least 250°C, e.g. 300°C or more is achieved.

We have found that when the surfaces are to be fused together, the rate and duration of the heating are preferably such that the material at each of the surfaces is melted to a depth which is at least sufficient to permit molecular diffusion across the interface. On the other hand, if the surface is melted to an excessive depth, this is not only wasteful of power but can also cause the formation of voids on cooling. The surface is preferably melted to a depth of 0.05 to 0.25 cm (0.02 to 0.1 inch), particularly 0.089 to 0.20 cm (0.035 to 0.08 inch), especially 0.10 to 0.15 cm (0.04 to 0.06 inch). If desired, the depth to which melting has taken place can be monitored with the aid of holes drilled from the outside of the article and leaving a precisely known wall thickness between the bottom of the hole and the surface which is to be fusion bonded to the gasket; as soon as melting to the bottom of the hole has taken place, molten polymeric material will be extruded through the hole. If the depth of melting is too great, it can be reduced by increasing the power and reducing the duration of the heating.

8. Use of Conductive Bridges to Control Generation of Heat

In some cases, we have found, it is difficult or impossible to ensure that the whole of the gasket makes intimate contact with another solid body so that heat is rapidly removed through the whole of the gasket surface. For example, if a coupler comprising tube-forming component(s) and gasket(s) is wrapped around the ends of two pipes to be joined, then unless the pipe ends are precisely mated together (which rarely happens), excessive heat may be generated in the conductive polymer which overlies the gap between the pipes. This problem can be solved by using a plurality of conductive polymer heating elements, each having its own electrodes. We have found, however, that a better solution is to provide a conductive bridge over or through that part of the conductive polymer element which is liable to become overheated. The conductive bridge can be, for example a layer of a low resistivity material, e.g. a silver- or other metal-comprising material, which has been applied, e.g. by printing, to appropriate parts of one surface of the conductive polymer element. The bridge ensures that little or no heat is generated in the conductive polymer in the bridge area. The bridge itself is preferably of low resistance so that substantially no heat is generated therein, but it can be chosen so as to generate a controlled amount of heat, less than would be generated in the conductive polymer in the absence of the bridge. The bridge is preferably shaped so as to avoid undue current concentration; for example a bridge in the form of a peninsula preferably has a round or pointed end. The electrodes and/or the bridge can for example be produced by etching a continuous metal layer on the surface of a conductive polymer element.

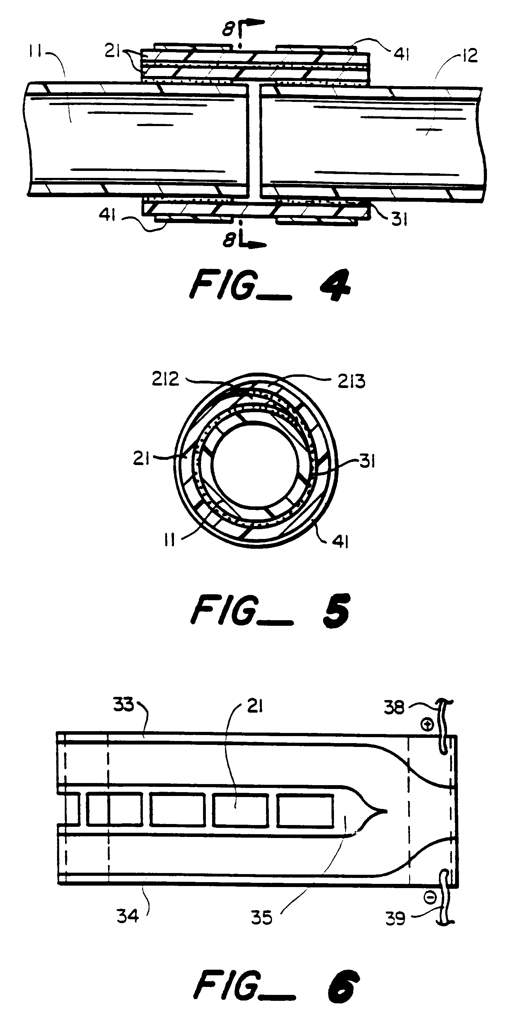

A conductive bridge can also be used to change the effective shape of strip electrodes running down the side of the conductive polymer element. For example, the presence of a central conductive bridge along part of the length of a heating element can cause the heating element to be substantially hotter in the end area which does not contain the central conductive bridge. To avoid this, conductive bridges can be placed over each of the electrodes in the end area in order to reduce the path length between them and make the heating more uniform. This is illustrated for example by Figure 6.

### 9. Windows in Conductive Polymer Elements

While the use of a conductive bridge often produces very valuable results, failure to heat one part of the conductive polymer can produce an unbalanced physical response of the gasket as a whole which is undesirable. In some cases, therefore, it may be desirable to weaken or remove part of all of the conductive polymer in the bridge region; this may make it necessary to use a physically stronger conductive bridge than would otherwise be required.

A particular example of this can arise when a heating element having a conductive bridge but no window therein is fused to the tube-forming component(s) of a pre-assembled composite coupler which is used to join two pipes. If the composite article is brought into intimate contact with the pipes by means of bands of metal or other non-elastic material, the expansion of the heating element can only be accommodated by driving the pipes away from each other. This problem does not arise if the restraining means has sufficient elasticity to allow the expansion to take place radially. Nor does the problem arise if the heating element is not fused to the coupler and there is room for the conductive polymer in the bridge area to buckle up between the pipe ends. If there is a window in the bridge area then the expansion can be accommodated by movement of the conductive polymer into the window. Movement of this kind can be beneficial in effecting interpenetration of the materials at the interface.

### 10. Non-heat-recoverable and Heat-recoverable Articles and Gaskets

One of the advantages of the present invention, as compared to many methods previously proposed, is that in general, excellent results can be obtained when the tube-forming component(s) of the coupler and the article to which the coupler is to be joined, and the gaskets are not heat-recoverable. When we say herein that an article is "not heat-recoverable", we mean that if the article is heated on its own to any temperature used in the method and is then cooled back to room temperature, its dimensions at room temperature are not substantially changed (e.g. no dimension changes by more thatn 10%), by such heating and cooling. It will be understood, however, that the invention does not exclude the possibility that the tube-forming component(s) of the coupler, the article to which the coupler is to be joined, or the gasket is heat-recoverable. Indeed, for example, if the recess between the tube-forming component(s) of the coupler, the article to which the coupler is to be joined is relatively wide or irregular in shape, it may be desirable for at least part of the gasket to be heat-recoverable so as to ensure that it fills the recess and/or drives a sealant material in a desired direction. If the tube-forming component(s) of the coupler or the article to which the coupler is to be joined are heat-recoverable, the gasket is unlikely to provide sufficient heat to bring about satisfactory recovery thereof, so that an additional heat source is needed.

### 11. Restraining Means for Holding Articles in Place

Restraining means, e.g. clamps, may be used in combination with the coupler.

These may be employed both to cause the relative movement which produces the desired intimate contact and to maintain the intimate contact. Suitable restraining means can be of an appropriate kind. For example, when forcing tube-forming component(s) of the coupler into intimate contact with the outside of the article to which the coupler is to be joined, e.g. a pipe, elastomeric organic material of any kind can be wrapped around the first and second articles. Hose clamps and the like can also be used. Techniques and materials of the kinds employed for strapping loads onto pallets, e.g. steel bands which are tensioned by ratcheted levers, are also useful when larger forces are required. We have also obtained excellent results using a heat-shrinkable polymeric tape which is wrapped tightly around the two articles. As a result of the heat generated in the gasket, aided if necessary by external heating, the tape shrinks and thus ensures that the desired intimate contact is maintained. The shrinkage required is small, e.g. less than 10%. Many polymeric tapes, e.g. polyimide tapes, will shrink to this extent when heated.

The tube-forming component(s) of the coupler can also be placed inside a hollow-article to join to it, e.g. inside a pipe, and driven into intimate contact with the inner surface thereof by an expansion means, which can for example be expanded by mechanically generated forces or by a bladder which is expanded by hydraulic or other forces.

If desired, tube-forming component(s) of the coupler, or the article to which the coupler is to be joined can comprise one or more grooves, ridges, hooks or other indentations or projections which will cooperate with a restraining means to bring about intimate contact. It is also possible for the restraining means itself to be secured to tube-forming component(s) of the coupler, the article to which the coupler is to be joined, or for each of the tube-forming component(s) of the coupler, and the article to which the coupler is to be joined to comprise a part of a restraining means so that when assembled, the parts cooperate to provide a restraining means.

12. Coupling Techniques

We have realised that intimate contact can be achieved by making use of an article (e.g. a pipe or pipes) to be connected to the coupler which is relatively strong and rigid, and tube-forming component(s) of the coupler which can be relatively deformable, and by forcing the tube-forming components of the coupler against the article to which it is to be joined with one or more gaskets sandwiched between them. An additional advantage of this technique is that the gasket or gaskets can be secured to the coupler before the coupler is placed around the article to which it is to be joined, thus ensuring that the gasket(s) is (are) correctly placed. The gasket or gaskets function both to bond the coupler to the article and to bond overlapping parts of the coupler to each other to ensure a properly sealed joint. The techniques just described can also be used when the "coupler" does not join two pipes together, but rather repairs or otherwise modifies a single pipe or other substrate.

Similar techniques can also be used to secure tube-forming component(s) of the coupler to the interior of a hollow article, the diameter of the tube-forming component(s) being increased by the application of mechanical forces.

13. Flexible Tapes as Wrap-around Couplers

In one embodiment, the tube-forming component of the coupler is a flexible tape, and a flexible laminar gasket is secured to one face thereof; the combined coupler is wrapped tightly around the article to which it is to be joined; the wrapped end is secured in place, heat generated by passing electrical current through the heating element; and the heat generated within the gasket causing the tape to become bonded to the article in the non-overlapped area and to itself in the overlapped area. The term "tape" is used herein in a broad sense to denote any elongate article having a substantially flat cross-section, and thus includes for example articles whose unstressed configuration is flat and articles whose unstressed configuration is curved, including substantially tubular. The terms "flexible" and "wrapped" are used herein in a broad sense to denote any article which can be passed transversely over a pipe or other substrate and can then be brought into intimate contact with the substrate by the application of mechanical forces.

Thus in this embodiment of the invention, the tape can be a relatively thin flat polymeric tape such that the combined article can easily be wrapped by hand in multiple wraps around the article. Alternatively, the tape can be a relatively thick and curved article obtained by making one or more longitudinal cuts in a polymeric tube having an inner diameter larger than, preferably only slightly larger than, the outer diameter of the article. A laminar gasket is then secured to the inner surface of the tape. The combined coupler is passed transversely over the article and then forced into intimate contact with the tape. Very large crimping forces can be used, often limited only by the need not to deform the article. Preferably the coupler has the necessary flexibility at room temperature, but the invention includes the possibility of heating the coupler, e.g. by passing current through the conductive polymer, to increase its flexibility, before it is wrapped around the substrate.

Unless the tape is thin enough to make this unnecessary, the covered edge of the flexible tape is preferably chamfered so as to provide a smooth transition and ensure that there is not a void between the gasket and the second article in this area. When the tape is a relatively thick and inflexible one, so that it must be crimped into place, such a chamfered edge also helps the outer wrap to slide over the transition and thus achieve the desired intimate contact.

When a relatively thin and flexible polymeric tape is used, depending upon the thickness of the tape and the properties needed in the final article, the extent of the wrapping may merely be sufficient to seal the wrapped edges, or there may be multiple wraps to provide improved physical properties. Alternatively or additionally, the physical strength of the coupling can be increased by means of an outer coupler (which can optionally also serve as a restraining means during the heating step); since the coupler of the invention provides a seal around the pipe(s), the outer coupler need not do so.

When a relatively thick and inflexible polymeric tape is used, e.g. one cut from a tube, the overlap area will often be confined to the chamfered lower edge of the coupler. In that case, the overlapping edge is preferably also chamfered so that it will mate with the lower edge but is capable of sliding over it.

15. Use of Couplers Having Sliding Edges

The one-piece wrap-around coupler having chamfered edges, as just described, is one example of a preferred class of couplers, namely those comprising mating edges which contact each other (usually through a gasket) when the coupler is in place, and which can slide relative to each other in a circumferential direction when appropriate mechanical forces are used to change, usually to reduce, the diameter of the coupler. Preferably the mating edges are produced, or theoretically could have been produced, by cutting a tube from end to end thereof along a cutting surface which, when projected, does not pass through the centre of the tube, preferably along a plane which is parallel to the axis of the tube and which forms an angle of 0° to less than 90°, e.g. O to 45°, preferably 0° to 20°, especially 0° to 10°, with a plane which is tangential to the inner surface of the tube at the point where the cutting surface cuts the inner surface of the tube. However, other more complex shapes can also be used, for example stepped configurations.

## 14A. Non-Wrap-Around Couplers With Sliding Edges

The one-piece wrap-around coupler having chamfered edges and obtained by cutting a polymeric tube longitudinally, as described at the end of section 13, can of course also be used, when there is access to the end of the pipe, by passing it longitudinally over the pipe. Furthermore, in such a situation there can also be used a coupler which is of similar design but has insufficient flexibility to be used as a wrap-around article, though retaining sufficient flexibility to be forced into intimate contact with the substrate. Thus a non-wrap-around coupler can be made of more rigid material and/or have a greater wall thickness.

## 14B. Articulated Wrap-Around Couplers With Sliding Edges

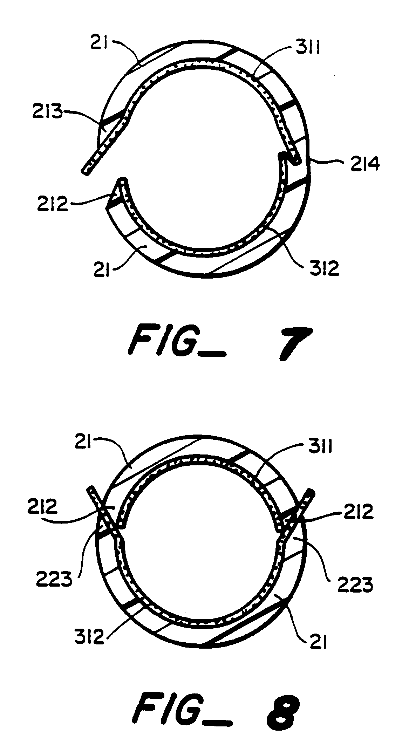

When it is desired to use, as a wrap-around coupler, a one-piece coupler which has insufficient flexibility to be passed transversely over the substrate, one way of achieving the desired result is to form at least one longitudinal line of weakness in the coupler, thus increasing its flexibility. In such a coupler, the line of weakness in effect forms a joint, and such a modified coupler is therefore referred to herein as an articulated coupler. Preferably, measures are taken to ensure that the line of weakness does not remain in the finished coupler. In a preferred embodiment the line of weakness is produced by making a longitudinal cut partially through the wall of the coupler, e.g. through 40 to 70% of the wall thickness, the cut preferably being made from the inside, and preferably at a substantial angle to the radial direction, e.g. at an angle of 30° to 75°, preferably 45 to 65°, to the radial direction. The gasket can be placed within this cut, as well as on the inside surface and one of the sliding edges of the coupler, and this will ensure that the line of weakness does not remain in the finished article. An articulated coupler of this kind is shown in Figure 7.

## 14C. Multi-Part Wrap-Around Couplers With Sliding Edges

Closely related to the articulated couplers described above are multi-part couplers comprising components which are completely separate, rather than flexibly joined to each other. Such multi-part couplers typically comprise two separate components, but there may be more, e.g. three or four, particularly when the coupler is a complex one for joining disparate substrates, e.g. pipes of different size and/or different materials. In such multi-part couplers there are at least two longitudinal junctions formed by abutting edges of the components. At least one, and preferably at each, of the junctions, the abutting edges are shaped so that they can slide relative to each other, and thus accommodate a change in the diameter of the coupler. A two-part coupler of this kind is illustrated in Figure 8.

## 15. Couplers Without Sliding Edges

The various couplers described in sections 12-14 above are also useful in the present invention when they do not have sliding edges or other means which enable them to change in diameter when pressed into intimate contact with the substrate. However, in that case, they must be precisely sized to the substrate, and/or additional measures must be taken to ensure a satisfactory longitudinal joint along the abutting edges.

## 16. Use of the Invention for Purposes Other than Joining Pipes

The invention is chiefly described herein by reference to its use for joining pipes. However, it is to be understood that the invention is also useful for joining any two or more articles together, especially articles whose adjacent surfaces are composed of the same polymeric composition or of different but compatible polymeric compositions and which are joined together by fusion to opposite faces of a laminar conductive polymer element. Where the invention is described herein for joining pipes, it is to be understood that the description is also applicable, to the extent appropriate, to joining other substrates.

One important use of the present invention is in repairing damaged pipes. For this purpose, the wrap-around "couplers" described above can be used.

Another important use of the present invention is to provide a port (e.g. for a branch pipe, a pressure access device or a tap) on a pipe, cable or other supply line containing a fluid or gas. In this use, the tube-forming component(s) of the coupler is similar to one of the wrap-around couplers described above, but in addition comprises a fitting which provides a port of desired dimensions. Before or after the tube-forming component(s) of the coupler has been secured to the supply line (usually after), a hole is drilled through the supply line so that the port communicates with the interior of the supply line.

## 17. Overheating and Insulating Barriers

We have found that when two heating elements are adjacent to each other in a section having a relatively small amount of the tube-forming component(s) of the coupler or the article to which the coupler is to be joined, overheating can occur and/or there can be current flow between the adjacent heating elements (as for example in the tip of the edge portions 212 in Figure 8). This problem can be alleviated by placing an insulating barrier over the edge of one or both of the heating elements in the relevant section.

## 18. Reentry

In many cases, especially when the surfaces have been joined by fusion, repowering the heating element(s) makes it possible to separate the tube-forming component(s) of the coupler and the article to which the coupler is to be joined from each other.

Embodiments of this invention are now described, by way of example, with reference to the accompanying drawing, in which

Figure 1 is a longitudinal-section through an assembly in which two pipes are being joined together via a wrap-around flexible coupler comprising a gasket secured to its inner face;

Figure 2 is a cross-section on line 5-5 of Figure 1;

Figure 3 is an "unrolled" plan view of the gasket used in Figures 1 and 2;

Figure 4 is a longitudinal-section through an assembly in which two pipes are being joined together by a coupler having mating edges which can slide relative to each other and having a gasket secured to its inner surface;

Figure 5 is a cross-section on line 8-8 of Figure 4;

Figure 6 is an "unrolled" plan view of the gasket used in Figures 4 and 5;

Figure 7 is a cross-section through an articulated coupler comprising two gaskets secured to the inner face thereof;

Figure 8 is a cross section through a two-piece coupler comprising two gaskets secured to respective inner faces of the two parts of the coupler;

The invention is illustrated in the accompanying drawings. Before discussing the various Figures, it should be noted that in each of them, the thicknesses of the conductive polymer element, the electrodes, the conductive bridges, and the various restraining means are exaggerated in the interests of clarity. In each of the Figures, the conductive polymer is a sintered mixture of ultrahigh molecular weight polyethylene and carbon black.

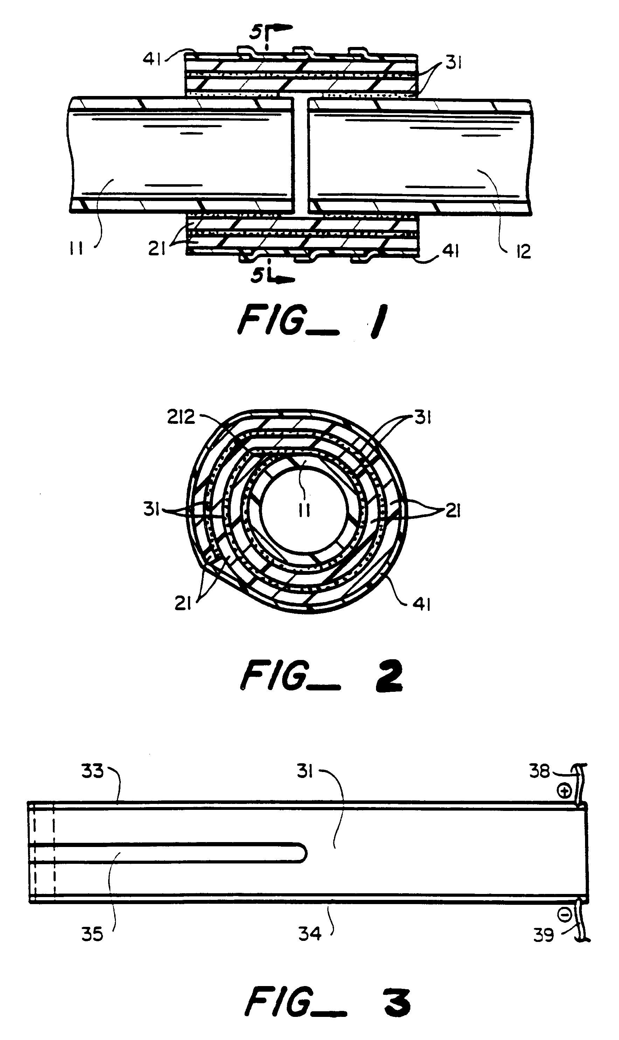

Figures 1 and 2 show two polyethylene pipes 11 and 12 which are being joined together by means of a flexible wrap-around coupler which comprises a sheet 21 of polyethylene and a laminar heater comprising a laminar conductive polymer element 31.

The inner edges of the sheet 31 and element 21 secured together and are chamfered at 212 to provide a smooth transition area in the wrapped assembly. Sheet 31 and element 21 are secured to each other only in the region of the inside edge, so that they can move relative to each other as the coupler is wrapped around the pipes. As best shown in the plan view of the "unrolled" coupler in Figure 3, there are electrodes 33 and 34 secured to the surface of the heating element 31 along the edges thereof. There is also a conductive bridge 35 secured to one face of the heating element so that heat is not generated in the area of the heating element which covers the gap between the pipes.

After the flexible coupler has been wrapped around the pipes, using a sufficient number of wraps to obtain a final joint of desired strength, it is then secured in place by overlapping wraps of a heat-shrinkable polyimide tape 41. The heater is then powered, thus fusing the coupler to the pipes and to itself and causing shrinkage of the tape 41.

Figures 4 and 5 show two polyethylene pipes 11 and 12 which are being joined together by means of a coupler which comprises a polyethylene member 21 and a laminar heater comprising a conductive polymer element 31. The member 21 is obtained by making a longitudinal cut in a length of a polyethylene pipe, the cut being angled so that the resulting cut edges 212 and 213 are chamfered so that they can slide over each other to increase or reduce the diameter of the coupler. The member 21 is flexible enough to permit such sliding motion, but not flexible enough to be opened up for use as a wrap-around coupler. The laminar heater is fused to the inside of the member 21 and one of the cut edges thereof. As best shown in the plan view of the "unrolled" coupler in Figure 6, there are electrodes 33 and 34 secured to the surface of the heating element 31, and a centre section has been removed from the heating element in the area of the heating element which covers the gap between the pipes; a conductive bridge 35 provides for current flow across the centre section between the electrodes. The electrodes 33 and 34 and the centre section 35 are shaped so that the current density is substantially the same throughout the heating element.

The ends of the pipes 11 and 12 are placed within the coupler, which is then reduced in diameter by means of metal bands 41 which are crimped around the coupler. The heater is then powered, thus fusing the coupler to the pipes and to itself.

If two pipes are coupled together in the way just described, but without removing the centre section of the heater, then the expansion of the heated parts of the heater, closely confined as it is by the inflexible metal bands and the pipes, has a tendency to force the pipes apart.

Figure 7 shows an articulated coupler which comprises a polyethylene member 21 and two laminar heaters comprising conductive polymer elements 311 and 312. The member 21 is obtained by making two longitudinal cuts in a length of a polyethylene pipe. One cut passes all the way through the pipe wall and produces edges 212 and 213 which are chamfered so that the cut edges can slide over each other to reduce the diameter of the coupler. The other cut, diametrically opposite the first, passes part way through the pipe wall, leaving a hinge section 214 which permits the member to be opened up so that it can be passed transversely over a pipe. The laminar heaters are secured to the inner faces and the cut edges of the member 21.

Figure 8 is very similar to Figure 7, except that both the longitudinal cuts pass all the way through the pipe wall, so that the coupler is in two separate parts.

The invention is further illustrated by the following Examples.

Example 1

A conductive polymer composition was prepared by dry blending in a high speed blender 95 parts by volume of ultra high molecular weight polyethylene powder, UHMWPE (Hostalen GUR-413, available from American Hoechst), having a molecular weight of about 4.0 million and an average particle size of about 0.1 mm, and 5 parts by volume of carbon black (Ketjenblack EC 300 DJ, available from Akzo Chemie). The mixture was extruded through a ram extruder heated to 170°C at a rate of 5 feet/minute (152 cm/minute) and a pressure of 3000 psi (20685 KPa) to produce a sintered rod 8 inches (20.3 cm) in diameter. The rod was skived to produce a flexible tape 36.5 by 6 by 0.03 inches (92.7 by 15.2 by 0.076 cm) from it. Electrodes were attached 0.5 inch (1.3 cm) from each long edge and a broad strip of silver paint (l by 34.5 inch/2.5 by 87.6 cm) was painted down the centre of the element, starting at one end. This produced two 2-inch (5.08 cm) wide heating zones 34.5 by 2 inch (87.6 by 5.08 cm), separated by a 1 inch (2.54 cm) "cold zone" and a terminal 5 by 2 inch (12.7 by 5.1 cm) heating zone at one end of the heating element. XXX To improve the uniformity of heating, silver paint was painted in a pattern which decreased the width of the terminal heating zone to 4 inches (10.2 cm).

A 6.75 inch-long (17.1 cm) coupler as shown in Figure 5 was prepared. A polyethylene pipe which had a 10 inch (25.4 cm) inner diameter (ID) and a 12 inch (30.5 cm) outer diameter (OD) was cut through its thickness on a tangential line at the ID of the pipe which was perpendicular to a radial line through the pipe. The laminar heating element was secured to the coupler as follows. The heating element was placed around the inner diameter of the coupler with the terminal heating zone in the region of the cut through the coupler and with the ends of the electrodes protruding from the coupler; a pipe coated with PTFE was inserted into the coupler and the heating element was powered at 150 volts AC for 30 seconds; after cooling, the PTFE-coated pipe was removed.

Two l0-inch (25.4 cm) OD polyethylene pipes (0.75 inch/l.9 cm thick) were inserted into the coupler and clamps were attached on the outside of the coupler. The heating element was powered at 125 volts AC for 115 seconds to fuse the heating element to the pipes.

Example 2

A heating element was prepared as in Example 1 except that it was cut into two pieces, one 20.5 inches (52.1 cm) long and the other 18.9 inches (48.0 cm) long. Each piece had an appropriate heating zone at one end.

The coupler as shown in Figure 8 and 6.75 inch (17.1 cm) long was prepared by cutting a 12-inch (30.5 cm) OD pipe into two pieces using a cut as described in Example 2 and its mirror image. The heating element pieces were prefused to the inner diameter of each segment prior to fusing the heating element to two 10-inch (25.4 cm) OD polyethylene pipes.

Example 3

A coupler as shown in Figure 7 and 6.75 inch (17.1 cm) long was prepared as described in Example 1 except that a second tangential cut, of an angle corresponding to that of the first cut, was made into the coupler's inner diameter, but not all the way through the thickness of the coupler. As a result, the coupler could be opened to produce a segmented coupler with two shell-forming surfaces. Appropriately sized heating elements were fused to the inner surface of the coupler prior to making connection to two 10-inch (25.4 cm) OD polyethylene pipes.

Example 4

A laminar heating element as described in Example 1 was prepared without the silver paint strip down the centre. The element was fused to a 0.030 inch (0.076 cm) strip of high density polyethylene by powering the heating element while in contact with the polyethylene strip to produce a gasket. The gasket was used to connect two 10-inch (25.4 cm) OD polyethylene pipes by wrapping the gasket around the outer diameter of the pipes, applying clamping means around the gasket, and powering the heating element.

**Claims**

1.  A coupler suitable for joining to another article, preferably a pipe (11, 12), the coupler comprising a tubular member (21) which is composed of an electrically insulating polymeric composition, a heating element (31) secured to the inner surface of the tubular member and at least two electrodes (33, 34) which can be connected to a source of electrical power to cause electrical current to flow through the heating element, characterised in that:
    (1) the tubular member is made up of one or more tube-forming components (21);
    (2) the heating element (31) is laminar and is composed of a conductive polymer, the heating element forming part of a gasket which is secured to the inner surface(s) of the tube-forming component(s), and which additionally comprises the at least two electrodes (33, 34) which when connected to a source of electrical power cause current to pass through the heating element(s) substantially parallel to the surface thereof, and
    (3) said tube-forming component(s) and gasket(s) are such that
        (i) they can be assembled and/or deformed relative to each other to form a tubular coupler positioned around or within an article such as a pipe, and
        (ii) they can be brought into intimate contact with the article by the application of circumferential forces to the coupler.

2.  A coupler according to claim 1, wherein the tube-forming component(s) are not heat-recoverable.

3.  A coupler according to claim 1 and 2 wherein the tube-forming component(s) comprise longitudinally extending chamfered edges (212, 213) which can slide relative to each other to reduce the diameter of the coupler.

4.  A coupler according to claim 3, wherein the tube-forming component(s) is/are produced by cutting a tube from end to end thereof along a cutting surface which, when projected, does not pass through the centre of the tube.

5.  A coupler according to any one of claims 1 to 4, wherein the tube-forming component(s) comprise first and second members (21) each of which have chamfered edges (212), one or more gaskets (311, 312) being secured to the inner surface of the first member and another or other gaskets being secured to the inner edges of the second member, the first and second members being such that they can be assembled into a tubular coupler wherein the chamfered edges of the first and second member can slide relative to each other to reduce the diameter of the coupler.

6.  A coupler according to claim 5, wherein a gasket (312) is also secured to the chamfered edges (212) of the second member.

7.  A coupler according to claim 6, wherein at least the heating element (312) of the gasket secured to the chamfered edges of the second member extends beyond the outer surface of the first and second members, whereby it can be connected to a source of electrical power to cause the first and second members to be secured to one another.

8.  A coupler according to claim 1 or 2, wherein a single tube-forming component is provided in the form of a flexible tape (21).

9.  A coupler according to claim 8, wherein a gasket (31) is provided that is flexible and laminar and is secured to one face of the flexible tape (21).

10. A coupler according to any of claims 1 to 7, wherein two or more separate tube-forming components (21) of the coupler are provided.

11. A coupler according to claim 10, wherein there are at least two longitudinal junctions formed by abutting edges of the components.

12. A coupler according to any preceding claim wherein a conductive bridge (35) is provided over or through any part of the conductive polymer element which is liable, in use, to become overheated in the absence of such a bridge.

13. A coupler according to claim 12, wherein the conductive bridge is provided with at least one window therein.

14. A method of joining (a) a coupler comprising an electrically insulating polymeric tubular member (2') having a heating element (3') secured to the inner surface thereof and at least two electrodes (33, 34) secured to the heating element to (b) another article, preferably a pipe, the method comprising connecting the electrodes (33, 34) to a source of electrical power to cause electrical current to flow through the heating element (31), characterised in that:

    (1) the tubular member is made up of one or more tube-forming component(s) (21) and the method comprises

        (a) assembling these component(s) (21), and/or deforming these component(s) (21), relative to each other to form a tubular coupler positioned either around or within the article such as a pipe (11,12) and

        (b) applying circumferential forces to the relatively assembled or deformed tube-forming component(s) (21) to bring the tube-forming component(s) into intimate contact with the article (11, 12); and

    (2) the heating element (31) is laminar and composed of a conductive polymer, the heating element (31) forming part of a gasket which is secured to the inner surface of the tube-forming component(s), and wherein, when the method step of connecting the electrodes (33, 34) to a source of electrical power is carried out, the electrodes (33, 34) are so positioned that electrical current passes through the heating element substantially parallel to the surface thereof.

15. A method according to claim 14, wherein the tube-forming component(s) (21) comprise longitudinally extending chamfered edges (212, 213), and the method step of applying circumferential forces to the component(s) causes the chamfered edges (212, 213) to slide relative to each other to reduce the diameter of the coupler.

16. A method according to claim 14 or 15 wherein the tube-forming component(s) is in the form of a flexible tape (21), and a flexible laminar gasket is secured to one face thereof, and the method of assembling the component and applying circumferential forces to the component comprises wrapping the tape (21) tightly around the first article and securing the wrapped end in place.

**Patentansprüche**

1. Verbinder, der zur Verbindung mit einem anderen Gegenstand, bevorzugt einem Rohr (11, 12) geeignet ist, wobei der Verbinder aufweist: ein rohrförmiges Element (21), das aus einer elektrisch isolierenden polymeren Zusammensetzung besteht, ein Heizelement (31), das an der Innenfläche des rohrförmigen Elements befestigt ist, und wenigstens zwei Elektroden (33, 34), die mit einer elektrischen Stromquelle verbunden werden können, um zu bewirken, daß elektrischer Strom durch das Heizelement fließt, dadurch gekennzeichnet, daß:

    (1) das rohrförmige Element aus ein oder mehreren rohrbildenden Komponenten (21) besteht;

    (2) das Heizelement (31) laminar ist und aus einem leitfähigen Polymer besteht, wobei das Heizelement Teil einer Dichtung bildet, die an der Innenfläche (den Innenflächen) der rohrbildenden Komponente(n) befestigt ist, und zusätzlich die wenigstens zwei Elektroden (33, 34) aufweist, die, wenn sie mit einer elektrischen Stromquelle verbunden sind, bewirken, daß Strom durch das Heizelement (die Heizelemente) im wesentlichen parallel zu der Oberfläche davon fließt, und

    (3) die rohrbildende(n) Komponente(n) und Dichtung(en) derart sind, daß

        (i) sie relativ zueinander zusammengesetzt und/oder verformt werden können, um einen rohrförmigen Verbinder zu bilden, der um einen Gegenstand wie beispielsweise ein Rohr herum oder in einem solchen positioniert ist, und

(ii) sie durch das Aufbringen von Umfangskräften auf den Verbinder in innigen Kontakt mit dem Gegenstand gebracht werden können.

2.  Verbinder nach Anspruch 1, wobei die rohrbildende(n) Komponente(n) nicht wärmerückstellbar sind.

3.  Verbinder nach Anspruch 1 und 2, wobei die rohrbildende(n) Komponente(n) in Längsrichtung verlaufende abgeschrägte Kanten (212, 213) aufweisen, die relativ zueinander gleiten können, um den Durchmesser des Verbinders zu verringern.

4.  Verbinder nach Anspruch 3, wobei die rohrbildende(n) Komponente(n) hergestellt ist/sind durch Schneiden eines Rohrs von einem Ende zum anderen Ende davon entlang einer Schneidfläche, die, wenn sie projiziert wird, nicht durch die Mitte des Rohrs geht.

5.  Verbinder nach einem der Ansprüche 1 bis 4, wobei die rohrbildende(n) Komponente(n) ein erstes und ein zweites Element (21) aufweisen, die jeweils abgeschrägte Kanten (212) haben, wobei ein oder mehrere Dichtungen (311, 312) an der Innenfläche des ersten Elements befestigt sind und eine weitere Dichtung oder weitere Dichtungen an den Innenkanten des zweiten Elements befestigt sind, wobei das erste und das zweite Element derart sind, daß sie zu einem rohrförmigen Verbinder zusammengesetzt werden können, wobei die abgeschrägten Kanten des ersten und des zweiten Elements relativ zueinander gleiten können, um den Durchmesser des Verbinders zu verringern.

6.  Verbinder nach Anspruch 5, wobei eine Dichtung (312) ebenfalls an den abgeschrägten Kanten (212) des zweiten Elements befestigt ist.

7.  Verbinder nach Anspruch 6, wobei wenigstens das Heizelement (312) der Dichtung, die an den abgeschrägten Kanten des zweiten Elements befestigt ist, sich über die Außenfläche des ersten und des zweiten Elements hinaus erstreckt, wodurch es mit einer elektrischen Stromquelle verbunden werden kann, um zu bewirken, daß das erste und das zweite Element aneinander befestigt werden.

8.  Verbinder nach Anspruch 1 oder 2, wobei eine einzige rohrbildende Komponente in Form eines flexiblen Bands (21) vorgesehen ist.

9.  Verbinder nach Anspruch 8, wobei eine Dichtung (31) vorgesehen ist, die flexibel und laminar ist und an einer Fläche des flexiblen Bands (21) befestigt ist.

10. Verbinder nach einem der Ansprüche 1 bis 7, wobei zwei oder mehr getrennte rohrbildende Komponenten (21) des Verbinders vorgesehen sind.

11. Verbinder nach Anspruch 10, wobei es wenigstens zwei Längsverbindungen gibt, die von aneinanderstoßenden Kanten der Komponenten gebildet sind.

12. Verbinder nach einem der vorhergehenden Ansprüche, wobei eine leitfähige Brücke (35) über jedem oder durch jeden Teil des leitfähigen Polymerelements vorgesehen ist, der im Gebrauch dazu neigt, bei Abwesenheit einer solchen Brücke überhitzt zu werden.

13. Verbinder nach Anspruch 12, wobei die leitfähige Brücke mit wenigstens einem Fenster darin versehen ist.

14. Verfahren zum Verbinden (a) eines Verbinders, der ein elektrisch isolierendes polymeres rohrförmiges Element (21) mit einem Heizelement (31), das an seiner Innenfläche befestigt ist, und wenigstens zwei Elektroden (33, 34), die an dem Heizelement befestigt sind, aufweist, mit (b) einem anderen Gegenstand, bevorzugt einem Rohr, wobei das Verfahren das Verbinden der Elektroden (33, 34) mit einer elektrischen Stromquelle aufweist, um zu bewirken, daß elektrischer Strom durch das Heizelement (31) fließt, dadurch gekennzeichnet, daß
(1) das rohrförmige Element aus ein oder mehreren rohrbildenden Komponenten (21) besteht und das Verfahren folgende Schritte aufweist:
(a)    Zusammensetzen dieser Komponente(n) (21) und/oder Verformen dieser Komponente(n) (21) relativ zueinander, um einen rohrförmigen Verbinder zu bilden, der entweder um den Gegenstand wie beispielsweise ein Rohr (11, 12) herum oder in einem solchen positioniert ist, und
(b) Aufbringen von Umfangskräften auf die relativ zueinander zusammengesetzte(n) oder verformte(n) rohrbildende(n) Komponente(n) (21), um die rohrbildende(n) Komponente(n) in innigen Kontakt mit dem Gegenstand (11, 12) zu bringen; und

(2) das Heizelement (31) laminar ist und aus einem leitfähigen Polymer besteht, wobei das Heizelement (31) Teil einer Dichtung bildet, die an der Innenfläche der rohrbildenden Komponente(n) befestigt ist, und wobei, wenn der Verfahrensschritt des Verbindens der Elektroden (33, 34) mit einer elektrischen Stromquelle durchgeführt wird, die Elektroden (33, 34) so positioniert werden, daß elektrischer Strom durch das Heizelement im wesentlichen parallel zu seiner Oberfläche fließt.

15. Verfahren nach Anspruch 14, wobei die rohrbildende(n) Komponente(n) in Längsrichtung verlaufende abgeschrägte Kanten (212, 213) aufweisen und der Verfahrensschritt des Aufbringens von Umfangskräften auf die Komponente(n) bewirkt, daß die abgeschrägten Kanten (212, 213) relativ zueinander gleiten, um den Durchmesser des Verbinders zu verringern.

16. Verfahren nach Anspruch 14 oder 15, wobei die rohrbildende(n) Komponente(n) in Form eines flexiblen Bands (21) vorliegen und eine flexible laminare Dichtung an einer Fläche davon befestigt ist und das Verfahren des Zusammensetzens der Komponente und des Aufbringens von Umfangskräften auf die Komponente enges Wickeln des Bands (21) um den ersten Gegenstand herum und Befestigen des gewickelten Endes in seiner Lage aufweist.

**Revendications**

1. Raccord apte à une jonction avec un autre article, avantageusement à un tuyau (11, 12), le raccord comportant un élément tubulaire (21) qui est composé d'une composition polymérique électriquement isolante, un élément chauffant (31) fixé a la surface intérieure de l'élément tubulaire et au moins deux électrodes (33, 34) qui peuvent être connectées à une source d'énergie électrique pour faire circuler un courant électrique dans l'élément chauffant, caractérisé en ce que :
   (1) l'élément tubulaire est formé d'un ou plusieurs constituants (21) formant un tube ;
   (2) l'élément chauffant (31) est en feuille et est composé d'un polymère conducteur, l'élément chauffant faisant partie d'une garniture qui est fixée à la surface ou aux surfaces intérieures du constituant ou des constituants formant un tube, et qui comporte en outre les deux ou plus de deux électrodes (33, 34) qui, lorsqu'elles sont connectées à une source d'énergie électrique, font passer un courant dans l'élément ou les éléments chauffants, sensiblement parallèlement à leur surface, et
   (3) ledit constituant ou lesdits constituant(s) formant un tube et ladite garniture ou lesdites garnitures sont tels que
      (i) ils peuvent être assemblés et/ou déformés entre eux pour former un raccord tubulaire positionné autour ou à l'intérieur d'un article tel qu'un tuyau, et
      (ii) ils peuvent être amenés en contact intime avec l'article par l'application de forces circonférentielles au raccord.

2. Raccord selon la revendication 1, dans lequel le constituant ou les constituants formant un tube ne sont pas doués de reprise de forme à chaud.

3. Raccord selon les revendications 1 et 2, dans lequel le constituant ou les constituants formant un tube comportent des bords chanfreinés (212, 213) s'étendant longitudinalement, qui peuvent glisser l'un par rapport à l'autre pour réduire le diamètre du raccord.

4. Raccord selon la revendication 3, dans lequel le constituant ou les constituants formant un tube est/sont produit(s) par coupe d'un tube d'une extrémité à l'autre de celui-ci le long d'une surface de coupe qui, lorsqu'elle est projetée, ne passe pas par le centre du tube.

5. Raccord selon l'une quelconque des revendications 1 à 4, dans lequel le constituant ou les constituants formant un tube comprennent des premier et second éléments (21) ayant chacun des bords chanfreinés (212), une ou plusieurs garnitures (311, 312) étant fixées à la surface intérieure du premier élément et une autre ou d'autres garnitures étant fixées aux bords intérieurs du second élément, les premier et second éléments étant tels qu'ils peuvent être assemblés en un raccord tubulaire dans lequel les bords chanfreinés des premier et second éléments peuvent glisser l'un par rapport à l'autre pour réduire le diamètre du raccord.

6. Raccord selon la revendication 5, dans lequel la garniture (312) est également fixée aux bords chanfreinés (212) du second élément.

7. Raccord selon la revendication 6, dans lequel au moins l'élément chauffant (312) de la garniture fixée aux bords chanfreinés du second élément s'étend au-delà de la surface extérieure des premier et second éléments, grâce à quoi il peut être connecté à une source d'énergie électrique pour provoquer la fixation des premier et second éléments l'un à l'autre.

8. Raccord selon la revendication 1 ou 2, dans lequel un seul constituant formant un tube est prévu sous la forme d'un ruban flexible (21).

9. Raccord selon la revendication 8, dans lequel une garniture (31) est prévue, laquelle est flexible et en forme en feuille et est fixée à une face du ruban flexible (21).

10. Raccord selon l'une quelconque des revendications 1 à 7, dans lequel deux ou plus de deux constituants séparés (21), formant un tube, du raccord sont prévus.

11. Raccord selon la revendication 10, dans lequel il y a au moins deux jonctions longitudinales formées par des bords en butée des constituants.

12. Raccord selon l'une quelconque des revendications précédentes, dans lequel un pont conducteur (35) est prévu au-dessus ou à travers une partie quelconque de l'élément en polymère conducteur risquant, lors de l'utilisation, d'être surchauffée en l'absence d'un tel pont.

13. Raccord selon la revendication 12, dans lequel au moins une fenêtre est prévue dans le pont conducteur.

14. Procédé pour joindre (a) un raccord comportant un élément tubulaire polymérique électriquement isolant (2') à la surface intérieure duquel est fixé un élément chauffant (3'), et au moins deux électrodes (33, 34) fixées à l'élément chauffant, à (b) un autre article, avantageusement un tuyau, le procédé consistant à connecter les électrodes (33, 34) à une source d'énergie électrique pour faire circuler un courant électrique dans l'élément chauffant (31), caractérisé en ce que :

   (1) l'élément tubulaire est formé d'un ou plusieurs constituant(s) (21) formant un tube, et le procédé consiste ;

      (a) à assembler ce ou ces constituant(s) (21), et/ou déformer ce ou ces constituant(s) (21), entre eux, pour former un raccord tubulaire positionné autour ou à l'intérieur de l'article tel qu'un tuyau (11, 12) et

      (b) à appliquer des forces circonférentielles au constituant ou aux constituant(s) (21) formant un tube, relativement assemblés ou déformés, pour amener le constituant ou les constituant(s) formant un tube en contact intime avec l'article (11, 12) ; et

   (2) l'élément chauffant (31) est en feuille et est composé d'un polymère conducteur, l'élément chauffant (31) faisant partie d'une garniture qui est fixée à la surface intérieure du constituant ou des constituants formant un tube, et dans lequel, lorsque l'étape du procédé consistant à connecter les électrodes (33, 34) à une source d'énergie électrique est effectuée, les électrodes (33, 34) sont positionnées de manière qu'un courant électrique passe dans l'élément chauffant sensiblement parallèlement à sa surface.

15. Procédé selon la revendication 14, dans lequel le constituant ou les constituants (21) formant un tube comportent des bords chanfreinés (212, 213) s'étendant longitudinalement, et l'étape du procédé consistant à appliquer des forces circonférentielles au constituant ou aux constituants fait glisser les bords chanfreinés (212, 213) l'un par rapport à l'autre pour réduire le diamètre du raccord.

16. Procédé selon la revendication 14 ou 15, dans lequel le constituant ou les constituants formant un tube se présentent sous la forme d'un ruban flexible (21), et une garniture flexible en feuille est fixée à une face de ce ruban, et le procédé d'assemblage du constituant et d'application de forces circonférentielles au constituant consiste à enrouler le ruban (21) étroitement autour du premier article et à fixer en place l'extrémité enroulée.

FIG_ 1

FIG_ 2

FIG_ 3

FIG_ 4

FIG_ 5

FIG_ 6

FIG_ 7

FIG_ 8